## Europäisches Patentamt

## European Patent Office

## Office européen des brevets

(19)

(11) Veröffentlichungsnummer: **0 195 314**
**B1**

(12)

# EUROPÄISCHE PATENTSCHRIFT

(45) Veröffentlichungstag der Patentschrift:
**18.10.89**

(21) Anmeldenummer: **86102905.6**

(22) Anmeldetag: **05.03.86**

(51) Int. Cl.⁴: **E 04 C 2/26, C 09 J 7/02**

(54) Dichtungsband für geschäumte Polyurethan-Platten.

(30) Priorität: **14.03.85 DE 3509081**

(43) Veröffentlichungstag der Anmeldung:
**24.09.86 Patentblatt 86/39**

(45) Bekanntmachung des Hinweises auf die Patenterteilung:
**18.10.89 Patentblatt 89/42**

(84) Benannte Vertragsstaaten:
**AT BE CH DE FR GB IT LI LU NL SE**

(56) Entgegenhaltungen:
**BE-A- 667 453**
**CH-A- 547 924**
**FR-A- 2 288 614**
**US-A- 4 415 615**

(73) Patentinhaber: **VEREINIGTE ALUMINIUM-WERKE AKTIENGESELLSCHAFT, Berlin - Bonn**
**Postfach 2468 Georg-von-Boeselager-Strasse 25, D-5300 Bonn 1 (DE)**

(72) Erfinder: **Schulz, Peter, Oberholz 19, D-5203 Much (DE)**

(74) Vertreter: **Müller-Wolff, Thomas, Dipl.-Ing., c/o Vereinigte Aluminium-Werke AG Patentabteilung Postfach 2468, D-5300 Bonn 1 (DE)**

## Beschreibung

Die Erfindung betrifft ein Dichtungsband für geschäumte Polyurethan-Platten mit oder ohne Deckschicht gemäss DIN 18 164 und DIN 4102.

Derartige Platten können aus Hart- und Weichschaum hergestellt werden und mit Aluminium, Stahl oder Kunststoff als Abdeckung versehen werden.

Bei der Montage von mehreren Plattenelementen der eingangs genannten Art besteht die Notwendigkeit, die gegenseitige Lage bei der Montage zu justieren. Dies wird behindert, wenn zwischen den Elementen, die auf Druck zusammengeschoben werden, noch Klebstoff von Dichtungsstreifen vorhanden sind. Diese Dichtungsstreifen werden beim Ausschäumen der Dichtungsplatten als seitliche Führung eingesetzt. Sie bestehen üblicherweise aus Silikonpapier, um die Gleitfähigkeit zwischen Maschine und Dichtungselement zu verbessern. Aus Brandschutzgründen muss das Silikonpapier jedoch vor dem endgültigen Zusammenbau entfernt werden, damit die Brandklasse B 1 erfüllt wird.

Aufgabe der vorliegenden Erfindung ist es, ein Dichtungsband zu entwickeln, bei dem gleichzeitig mit der Entfernung der Deckschicht der Klebstoff abgezogen werden kann. Erfindungsgemäss geschieht dies durch die in den Patentansprüchen angegebenen Merkmale.

Es hat sich gezeigt, dass bei Verwendung des erfindungsgemässen Dichtungsbandes nur die Porenränder der Schaumplatten mit Klebstoff benetzt sind, so dass hier eine punktförmige Berührung entsteht. Zum Schaum hin sind also nur kleine wirksame Klebeflächen vorhanden, bedingt durch die Porigkeit und Poren-tiefe des Polyurethan-Hart- bzw. Weichschaums. Diese Massnahme wird unterstützt, wenn der Klebstoff nur eine Schichtdicke von 30–40 g/m$^2$, vorzugsweise 35 g/m$^2$, aufweist.

Im folgenden wird die Erfindung anhand des Anführungsbeispieles näher erläutert. Es zeigen:

Fig. 1 Querschnitt durch ein Dichtungsband im versiegelten und im teilweise abgezogenen Zustand,

Fig. 2 Querschnitt durch ein Plattenelement mit dem erfindungsgemässen Dichtungsband im versiegelten Zustand,

Fig. 3 u. Fig 4 Querschnitt und Ansicht zweier aneinandergefügter Plattenelemente mit Dichtungsband,

Fig. 5 erläutert die Anbringung des Dichtungsbandes,

Fig. 6 zeigt die Ansicht von x aus Fig. 5.

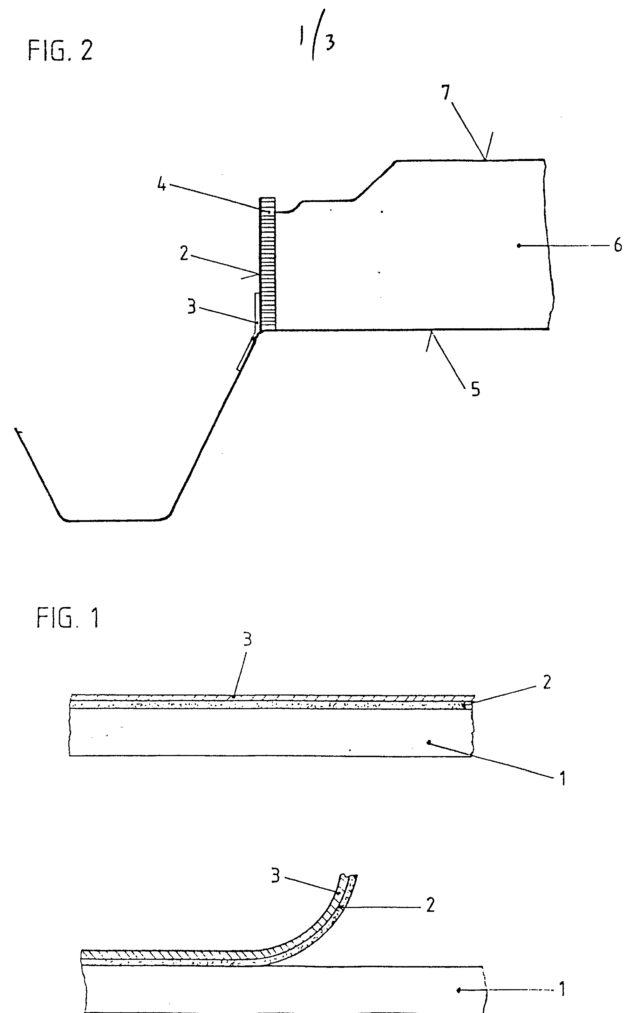

In Figur 1 besteht die Deckschicht 3 aus Papier, Folie o.dgl. und ist mit einem Kleber 2 an dem Polyurethan- bzw. Polyäthylenweichschaum 1 befestigt. Beim Abreissen der Deckschicht 3 bleibt der Kleber 2 an der Deckschicht haften, während der Weichschaum 1 keine Klebstoffreste aufweist. Dies wird ermöglicht durch den besonderen Aufbau des Klebers, der auf Polyacrylatbasis und/oder thermoplastischem Kautschuk besteht, der mit einer gegenüber Kautschuk schwer dehnbaren Deckschicht, wie z.B. Folie oder Papier, abgedeckt ist und durch Zugabe von Harz, Öl, Kautschuk und/oder Kunstharzleim flächendeckend haftet.

In Figur 2 ist ein Plattenelement mit Polyurethanschaum 6 und oberer Deckschicht 5 und unterer Deckschicht 7 dargestellt. Das Dichtungsband 4 ist noch mit der Deckschicht 3 aus Papier, Folie o.ä. versehen.

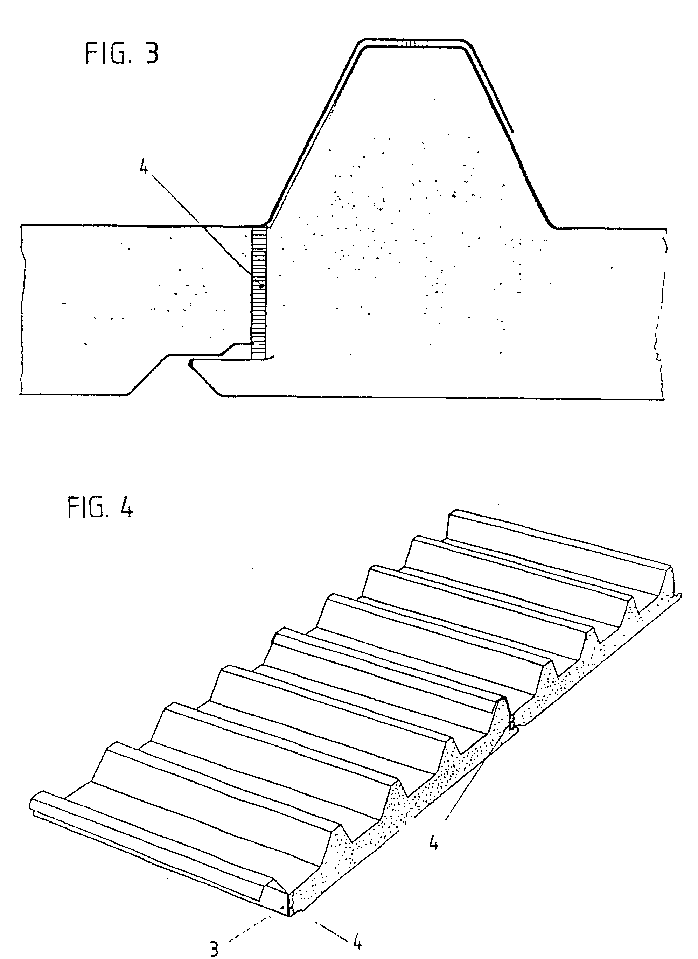

In den Figuren 3 und 4 sind zwei aneinandergefügte Plattenelemente dargestellt. Zwischen ihnen ist das Dichtungsband 4 zu erkennen, das nach der Verbindung nur noch aus dem Weichschaum ohne Deckschicht und Kleber besteht.

Figur 4 zeigt das Dichtungsband 4 mit der Deckschicht 3 vor und ohne Deckschicht nach der Montage.

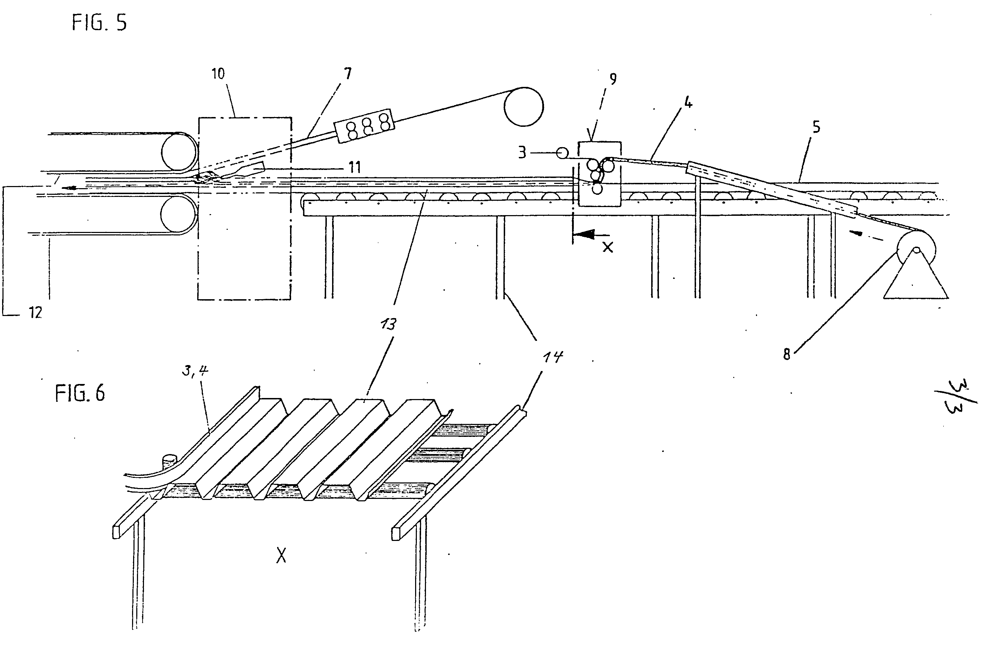

Die Anbringung des Dichtungsbandes geschieht in folgenden Verfahrensstufen (siehe Fig. 5 und 6): Das Dichtungsband 4, das sich auf einer Spule 8 befindet, läuft durch eine Vorrichtung 9, die mit einem Klebestreifen 3 das Dichtungsband an die obere Deckschicht 5 der zu schäumenden PUR-Platten 13 senkrecht an einer Seite anklebt.

Es wird im Schlepp der Deckschichtgeschwindigkeit durch die Beschäumanlage gezogen.

Die Anklebevorrichtung befindet sich vor der Spritzkabine 10. Die untere Deckschicht 7 wird kurz vor dem Schäumen zugeführt und auf Abstand zur oberen Deckschicht 5 gehalten.

Das an die obere Deckschicht 5 angeklebte Dichtungsband 4 legt sich an die Oberkante der unteren Deckschicht 7 an und wird durch den PUR-Schaum fest mit oberer und unterer Deckschicht verbunden.

Mit dem Bezugszeichen 11 ist die Spritzdüse, mit 12 das Doppeltransportband und mit 14 der Transportrollentisch bezeichnet.

## Patentansprüche

1. Dichtungsband für geschäumte Polyurethan-Platten, dadurch gekennzeichnet, dass die Basis des Dichtungsbandes ein acrylharzgetränkter Polyurethan-Weichschaum oder ein Polyäthylen-Weichschaum (1) ist, der einseitig mit einer Klebeschicht (2) auf Polyacrylatbasis und/oder thermoplastischem Kautschuk versehen ist, die mit einer im Vergleich zu Kautschuk schwer dehnbaren Deckschicht (3) abgedeckt ist, wobei der Klebstoff einerseits zur Deckschicht hin eine hohe Haftung gegen Abscheren und andererseits zum Schaum hin eine geringe Haftung gegen Abschälen besitzt, weil der Kleber nur die Schaumränder benetzt, während er zur Deckschicht hin durch Zugabe von Harz, Öl, Kautschuk und/oder Kunstharzleim flächendeckend haftet.

2. Dichtungsband nach Anspruch 1, dadurch gekennzeichnet, dass der Klebstoff als Klebefilm mit geringer Fliessneigung und Plastizität sowie hoher Härte verwendet wird.

3. Dichtungsband nach einem der vorhergehenden Ansprüche, dadurch gekennzeichnet, dass der Klebstoff eine punktförmige Berührung zur Oberfläche des Schaumes hin aufweist.

4. Dichtungsband nach einem der vorhergehenden Ansprüche, dadurch gekennzeichnet, dass der Klebstoff eine Schichtdicke von 30–40 g/m² aufweist.

## Revendications

1. Ruban d'étanchéité pour plaques de mousse de polyuréthanne, caractérisé en ce que la base de ruban d'étanchéité est une mousse souple de polyuréthanne imprégnée de résine acrylique ou une mousse souple de polyéthylène (1), qui est munie sur une face d'une couche d'adhésif (2) à base de polyacrylate, et qui est recouverte d'une couche de couverture (3) difficilement dilatable par rapport au caoutchouc, l'adhésif présentant d'une part une forte adhérence et une forte résistance à l'arrachage vis-à-vis de la couche de couverture et d'autre part une faible adhérence et résistance à l'arrachage vis-à-vis de la mousse, parce que l'adhésif ne mouille que les bords de la mousse, tandis que la couche de couverture, par addition de résine, huile, caoutchouc et/ou colle de résine synthétique adhère par toute sa surface.

2. Ruban d'étanchéité selon la revendication 1, caractérisé en ce que l'adhésif est utilisé comme film collant à faible tendance à l'écoulement et faible plasticité, ainsi qu'à dureté élevée.

3. Ruban d'étanchéité selon l'une des revendications précédentes, caractérisé en ce que l'adhésif présente un contact ponctuel avec la surface de la mousse.

4. Ruban d'étanchéité selon l'une des revendications précédentes, caractérisé en ce que l'adhésif présente une épaisseur de couche de 30–40 g/m².

## Claims

1. Sealing tape for foamed polyurethane panels, characterized in that the basis of the sealing tape is an acrylic-resin-impregnated flexible polyurethane foam or a flexible polyethylene foam (1) which is provided on one side with an adhesive layer (2) on a polyacrylate bas is and/or thermoplastic rubber, which adhesive layer (2) is covered with a protective layer (3) which is difficult to extend compared with rubber, the adhesive having on one side towards the protective layer a high adhesion against shearing and on the other side towards the foam a low adhesion against peeling, since the adhesive only wets the foam margins, while towards the protective layer, by the addition of resin, oil, rubber and/or synthetic-resin glue, it adheres in such a way as to cover the surface.

2. Sealing tape according to Claim 1, characterized in that the adhesive is used as an adhesive film having a slight tendency to flow and low plasticity as well as considerable hardness.

3. Sealing tape according to any of the preceding claims, characterized in that the adhesive has point-like contact towards the surface of the foam.

4. Sealing tape according to any of the preceding claims, characterized in that the adhesive has a layer weight of 30--40 g/m².

FIG. 2

1/3

FIG. 1

FIG. 3

4

FIG. 4

4

3

4

7

FIG. 5

FIG. 6